# EUROPÄISCHE PATENTSCHRIFT

(11) **EP 0 513 431 B1**
(45) Veröffentlichungstag und Bekanntmachung des Hinweises auf die Patenterteilung: **10.01.1996**
(21) Anmeldenummer: 91114878.1
(22) Anmeldetag: 04.09.1991
(51) Int. Cl.: B29C 47/08

(54) **Vorrichtung zum Aufbereiten und Strangpressen von Werkstoffen**
Device for preparing and extruding materials
Dispositif pour la préparation et l'extrusion de matériaux

(30) Priorität: 14.05.1991 DE 4115591
(43) Veröffentlichungstag der Anmeldung: 19.11.1992
(73) Patentinhaber: Blach, Josef A., D-71732 Tamm (DE)
(72) Erfinder: Blach, Josef A., D-71732 Tamm (DE)
(74) Vertreter: Bögl, Wolfgang, Dipl.-Ing.

(56) Entgegenhaltungen:
- DE-A- 2 126 316
- DE-B- 815 641
- GB-A- 2 048 092
- US-A- 2 488 189
- US-A- 3 968 955
- PATENT ABSTRACTS OF JAPAN vol. 9, no. 114 (M-380)(1837) 18. Mai 1985 & JP-A-60 002 329 (TOSHIBA KIKAI K.K.) 8. Januar 1985

## Beschreibung

Die Erfindung betrifft eine Vorrichtung zum Aufbereiten und Strangpressen von viskosen, elastischen, plastischen, granulatförmigen und/oder plastifizierbaren Stoffen mit einem langgesreckten, am Umfang geschlossenen Gehäuse, welches eine aus zwei ineinander übergehenden kreisförmigen Bohrungen bestehende Innenbohrung mit zwischen den Bohrungen vorhandenen Sattelbereichen aufweist und bei der in den Bohrungen miteinander kämmende Schneckenwellen drehbar und in der gleichen Drehrichtung antreibbar angeordnet sind.

Eine solche Vorrichtung ist bekannt ( DE-C-815 641 ). Die bekannte Vorrichtung mit mehreren - beispielsweise zwei - in einem gemeinsamen Gehäuse rotierenden Schneckenwellen wird u.a. dazu verwendet, um den in der Vorrichtung bearbeiteten Werkstoff zu fördern, zu kneten und/oder zu mischen. Bei einer Vorrichtung, in welcher die beiden Schneckenwellen den gleichen Drehsinn aufweisen, wird der zu behandelnde Werkstoff schraubenförmig an der Gehäuse-Innenwandung entlang bewegt, wobei er sich auf der Bahn einer liegenden 8 bewegt. Dieser Bewegung ist eine Axialbewegung überlagert.

Bei gleichsinnig drehenden und insbesondere bei kämmenden Schneckenwellenmaschinen sind die Schneckengänge nur auf einem Teil der Maschinenlänge voll gefüllt. Der zu bearbeitende Werkstoff staut sich vor jeder Umlenkung im Sattelbereich, d.h. also zweimal je Schneckenwellenumdrehung. Unmittelbar nach dem Sattel ist der Gang gering gefüllt oder leer.

Es ist eine Doppelschneckenstrangpresse bekannt (vgl. Prospekt der Fa. Baker Perkins Chemical Machinery "MCP/V 30 twin screw compounding extrusion lines for laboratory, quality control, and sample production use"), bei welcher im Sattel zwischen den Schneckenwellen ein drehbares, kegelförmiges Sattelventil angeordnet ist, bei dem der Kegel auf zwei einander gegenüberliegenden Seiten teilweise abgetragen ist. Zusammen mit den auf den Schneckenwellen angeordneten Absperrscheiben hat das Sattelventil bei der bekannten Doppelschneckenstrangpresse die Wirkung, daß es eine verstellbare Gehäuseöffnung zur Veränderung des axialen Fließwiderstandes darstellt.

Wegen der lokal begrenzten Ausdehnung des Sattelventils ist nur eine geringe Regelbreite des Fließwiderstandes zu verwirklichen. Wenn eine größere Veränderung des Fließwiderstandes gewünscht wird, dann ist es erforderlich, die Schnecken umzubauen oder mehrere Sattelventile in Achsrichtung der Schneckenwellen hintereinander anzuordnen.

Außerdem ist die bekannte Vorrichtung nur in Verbindung mit Absperrscheiben einsetzbar, welche den maximal erforderlichen Fließwiderstand erzeugen. Solche örtlichen Sperren verursachen auch eine hohe örtliche, häufig unzulässig hohe Beanspruchung sowohl des zu bearbeitenden Werkstoffes als auch der Doppelschneckenstrangpresse.

Es ist auch eine Mischvorrichtung bekannt ( DE-A- 21 26 316), in deren aus zwei parallelen, ineinander übergehenden Hohlzylindern bestehendem Mischbehälter Rotoren mit jeweils einem Schaufelblatt angeordnet sind. Die Schaufelblätter sind auf einem Teil ihrer Länge zur Drehrichtung hin gekrümmt und auf dem anderen Teil ihrer Länge entgegengesetzt zur Drehrichtung gekrümmt. Bei dieser bekannten Mischvorrichtung, welche auch als BANBURY-Mischer bezeichnet wird, wird der behandelte Werkstoff zwar geknetet, aber nicht weitergefördert.

Außerdem ist der bekannte Mischbehälter im Bereich der Rotoren mit einem zu öffnenden Wandteil versehen. Diese Ausgestaltung der Mischvorrichtung gestattet bei geöffnetem Wandteil die Zufuhr von Zusätzen zu den in der Mischvorrichtung behandelten Werkstoffen.

Diese bekannte Mischvorrichtung ist weder dafür vorgesehen, noch dafür geeignet, um die mechanische Einwirkung auf den in der Vorrichtung behandelten Werkstoff feinfühlig zu steuern.

Es ist ein Doppelschneckenextruder bekannt (JP-A-60-2329), welcher Mittel enthält, um die Fließgeschwindigkeit des zu bearbeitenden Werkstoffeszu steuern. Zu diesem Zweck ist die Gehäusebohrung örtlich dadurch in einem bestimmten Umfang veränderlich ausgebildet, daß ein Teil der Wandung der Gehäusebohrung flexibel ausgebildet ist und durch Betätigung einer Schraube zu den Schnecken hin oder von ihnen weg verstellt werden kann.

Es ist weiterhin eine Vorrichtung zum Extrudieren von Kunststoffen, wie Gummi, Zelluloseazetat, PVC oder dgl. mit zwei parallel zueinander angeordneten und in entgegengesetzter Drehrichtung angetriebenen Walzen bekannt (US-A-2,488,189), in deren Umfang schraubenförmig verlaufende Nuten angeordnet sind. In einer Kammer oberhalb der Walzen ist wenigstens ein Steuerventil vorgesehen, welches in eine Nut eintauchen kann.

Es ist auch ein BANBURY-Mischer bekannt (GB-A-2 048 092), bei dem ein vergrößerter Teil der Gehäuseöffnung oberhalb oder unterhalb der Misch-Rotoren vergrößert oder verkleinert werden kann. Das wird durch Schieber erreicht, welche sich wenigstens über den Abstand zwischen den Mischer-Rotoren erstrecken und mittels eines entsprechenden Antriebes vertikal verstellt werden können.

Das der Erfindung zugrunde liegende technische Problem besteht nun darin, die bekannte Vorrichtung in der Weise weiter zu entwickeln, daß der Widerstand, dem der Werkstoff in der Vorrichtung ausgesetzt ist, feinfühlig gesteuert werden kann, ohne daß der Werkstoff einer unzulässig starken Beanspruchung ausgesetzt ist.

Dieses technische Problem ist erfindungsgemäß dadurch gelöst, daß in wenigstens einem Sattelbereich der Abstand zwischen den Schneckenwellen und der Innenbohrung über eine größere Länge in Achsrichtung der Schneckenwellen größer ausgebildet ist, als dies für die Aufnahme der Schneckenwellen erforderlich ist.

Die erfindungsgemäß ausgestaltete Schneckenwellenstrangpresse weist auf einer größeren Länge des Gehäuses ein vergrößertes radiales Spiel im Bereich des Sattels auf, welches vor oder nach der als natürliche Drossel wirkenden Umlenkung im Bereich des Sattels angeordnet sein kann. Befindet sich das vergrößerte Spiel vor der Umlenkung, dann wird der sich vor der Umlenkung stauende Werkstoff wegen des vergrößerten Spiels weniger axial gefördert. Die Folge davon ist, daß bei gleichzeitig vergrößerter Leckströmung der Füllgrad in Umfangsrichtung und damit die Verweildauer und der Energieumsatz erhöht sind. Das vergrößerte Spiel nach dem Sattelpunkt bringt dagegen keine Beeinflussung der Förderverhältnisse, solange die Schnecken teilgefüllt sind.

Die Erfindung ermöglicht es, den Füllgrad und damit den Energieumsatz in einem ausgewählten Längenbereich der Schneckenwellenstrangpresse feinfühlig zu steuern, so daß der Energieumsatz auf eine größere Fläche verteilt wird, wodurch Vorrichtung und Werkstoff geschont werden.

Ein weiterer Vorteil besteht darin, daß wegen der möglichen verschiedenen konstruktiven Ausgestaltungen der Erfindung in verschiedenen Stufen, d.h. von der einfachsten Ausgestaltung bis zur automatischen Regelung, bei kleinen und großen Schneckenwellenstrangpressen verwirklicht werden kann, ohne daß an der Verfahrenstechnik grundsätzliche Änderungen notwendig wären.

Vorteilhafte Einzelheiten der Erfindung sind in den Ansprüchen 2 bis 12 enthalten. Sie ist nachstehend anhand der Figuren 1 bis 4 erläutert. Es zeigen:
- Fig. 1: den Querschnitt durch eine Schneckenwellenstrangpresse, welche mit einer Ausführungsform der Erfindung versehen ist,
- Fig. 2: den Querschnitt einer Schneckenwellenstrangpresse mit einer anderen Ausführungsform der Erfindung,
- Fig. 3a und 3b: den Querschnitt von zwei verschiedenen Zuständen einer Schneckenwellenstrangpresse mit einer weiteren Ausführungsform der Erfindung und
- Fig. 4: den Querschnitt einer Schneckenwellenstrangpresse mit einer wieder anderen Ausführungsform der Erfindung.

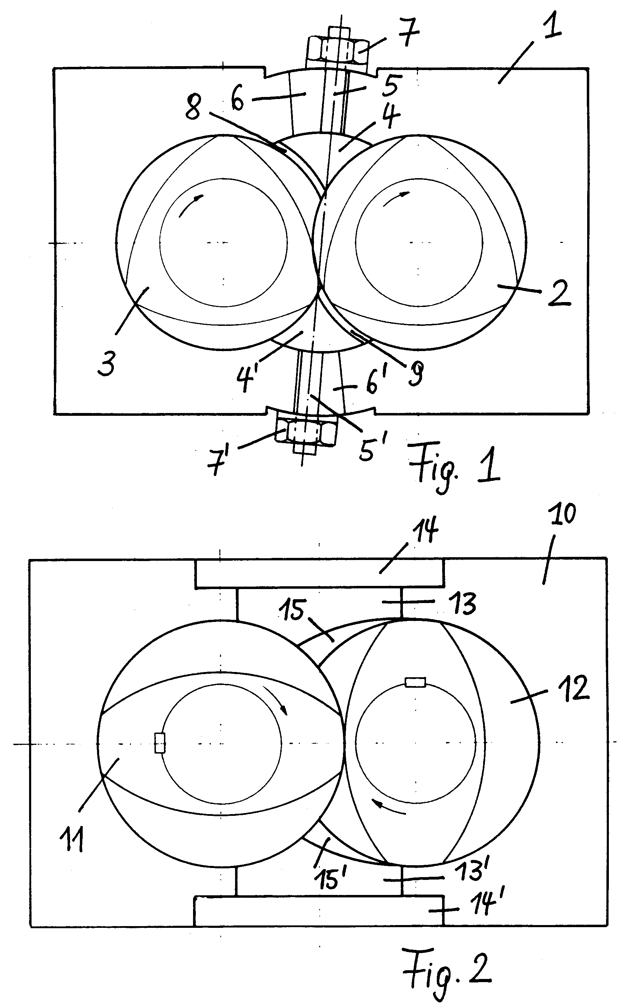

Aus Fig. 1 ist das Gehäuse 1 zu erkennen, das mit einer sich in Längsrichtung erstreckenden Innenbohrung versehen ist, welche die Form einer liegenden 8 besitzt. In dieser Innenbohrung sind nebeneinanderliegend die Schneckenwellen 2 und 3 angeordnet, welche - wie durch die Pfeile angedeutet - die gleiche Drehrichtung besitzen sollen. Im Sattelbereich zwischen den Schneckenwellen 2 und 3 ist die Innenbohrung mit einem sich in Achsrichtung über mehrere Gänge der Schneckenwellen 2 und 3 erstreckenden Hohlraum versehen, in dem die Leiste 4 angeordnet ist. Die Leiste 4 soll sich ebenfalls über mehrere Gänge der Schneckenwellen 2,3, erstrecken.

Bei dem in Fig. 1 gezeigten Ausführungsbeispiel der Leiste 4 sind ihre den Schneckenwellen 2,3 zugewandten Flächen der Form der Schneckenwellen 2,3 angepaßt. Diese Flächen können aber auch gerade ausgebildet sein. Bei dem gezeigten Ausführungsbeispiel ist die Rückseite der Leiste 4 gewölbt ausgebildet, welche in einer dieser Wölbung entsprechenden Mulde des Gehäuses liegt. An der Rückseite der Leiste 4 ist ein Stab 5 befestigt, der einen Schlitz 6 im Gehäuse 1 durchdringt. Die Leiste 4 kann dadurch in ihrer Lage geschwenkt und mittels der Schraube 7 arretiert werden.

Bei dem Ausführungsbeispiel gemäß Fig. 1 befindet sich der verstellbare Spalt 8 bzw. 9 zwischen der Leiste 4 und der Schneckenwelle 3 bzw. der Leiste 4' und der Schneckenwelle 2. Nach Lösen der Schraube 7 bzw. 7' kann durch Schwenken der Leisten 4 bzw. 4' jeder Spalt 8 oder 9 unabhängig von dem anderen eingestellt werden.

Die Leisten 4 bzw 4' können auch derart ausgebildet und gelagert sein, daß die Verstellung der Spalte 8,9 durch horizontales Verschieben der Leisten ausgeführt werden kann.

Die Vorrichtung gemäß Fig. 2 besitzt ebenfalls ein Gehäuse 10, in welchem die Schneckenwellen 11 und 12 angeordnet sind. In einer größeren Öffnung auf der Ober- und Unterseite des Gehäuses 10 sind die Sattelstücke 13 bzw. 13' angeordnet, welche mit dem Halter 14 bzw. 14' verbunden sind. Ein Teil der Oberfläche der Sattelstücke 13 bzw. 13' schmiegt sich eng an die Schneckenwelle 11 während zwischen den Sattelstücken 13 bzw. 13' ein etwa sichelförmiger Spalt 15 bzw. 15' vorhanden ist. Der Spalt kann jedoch auch eine andere Gestalt besitzen, jedoch weist er eine konstante Größe auf. Die Lage des Spaltes kann durch Veränderung der Lage des Sattelstückes 13 im Gehäuse 10 verändert werden. Wenn der Halter 14 mit dem Sattelstück 13 vertikal aus dem Gehäuse herausgenommen, um 180 Grad gedreht und wieder eingesetzt wird, dann befindet sich der Spalt 15 im Bereich der Schneckenwelle 11. Die Größe der Spalte 15 bzw. 15' kann durch Austausch der Sattelstücke 13 bzw. 13' verändert werden.

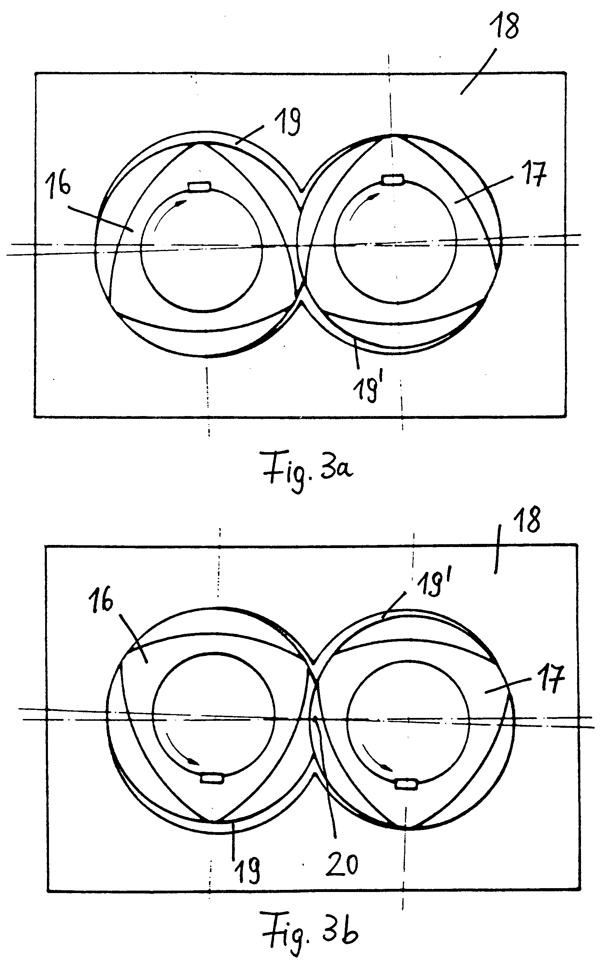

Bei der Ausführungsform der Vorrichtung gemäß den Figuren 3a und 3b soll die die Schneckenwellen 16 und 17 aufnehmende Bohrung des Gehäuses 18 größere Bohrungsdurchmesser aufweisen, als dies die Durchmesser der Schneckenwellen erfordern würden. Wenn - wie aus Fig. 3a zu erkennen ist - die Schneckenwellen 16 und 17 und das Gehäuse 18 eine bestimmte relative Lage zueinander aufweisen, dann entstehen zwischen den Schneckenwellen 16 bzw. 17 und den Innenflächen der Gehäusebohrung die Spalte 19 bzw. 19'. Wird nun das Gehäuse 19 relativ zu den Schneckenwellen 16 und 17 um den Mittelpunkt 20 gedreht, dann verändern die Spalte 19 und 19' ihre Lage, wie Fig. 3b verdeutlicht.

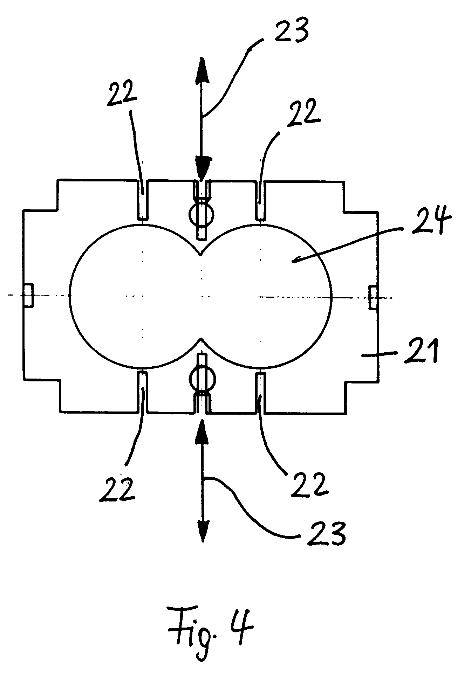

Eine ähnliche Wirkung wird durch die Vorrichtung gemäß Fig. 4 erzielt. Die Schneckenwellen sind in dieser Figur weggelassen worden. Bei diesem Ausführungsbeispiel ist das Gehäuse 21 in der Weise elastisch ausgebildet, daß es mit einer Mehrzahl von Schlitzen 22 versehen ist. Wenn auf die Längskanten des Gehäuses 21 - wie durch die Pfeile 23 angedeutet - Zug- und/oder Druckkräfte ausgeübt werden, dann wird die Innenbohrung 24 verformt, wodurch die zwischen den Schneckenwellen und der Innenfläche der Innenbohrung 24 vorhandenen Spalte ihre Form und Größe ändern.

## Patentansprüche

1. Vorrichtung zum Aufbereiten und Strangpressen von viskosen, elastischen, plastischen, granulatförmigen und/oder plastifizierbaren Stoffen mit einem langgestreckten, am Umfang geschlossenen Gehäuse (1,10,18,21 ), welches eine aus zwei ineinander übergehenden kreisförmigen Bohrungen bestehende Innenbohrung (24) mit zwischen den Bohrungen vorhandenen Sattelbereichen aufweist und bei der in den Bohrungen miteinander kämmende Schneckenwellen ( 2,3,11,12 ) drehbar und in der gleichen Drehrichtung antreibbar angeordnet sind,
dadurch gekennzeichnet, daß in wenigstens einem Sattelbereich der Abstand zwischen den Schneckenwellen (2,3,11,12 ) und der Innenbohrung ( 24 ) über eine größere Länge in Achsrichtung der Schneckenwellen größer ausgebildet ist, als dies für die Aufnahme der Schneckenwellen erforderlich ist.

2. Vorrichtung nach Anspruch 1,
dadurch gekennzeichnet, daß die Abstandsvergrößerung einen konstanten Wert aufweist.

3. Vorrichtung nach Anspruch 1,
dadurch gekennzeichnet, daß die Abstandsvergrößerung in einem begrenzten Größenbereich kontinuierlich veränderbar ausgebildet ist.

4. Vorrichtung nach den Ansprüchen 1 bis 3,
dadurch gekennzeichnet, daß die Abstandsvergrößerung durch wenigstens ein im Sattelbereich angeordnetes, selbständiges Gehäuseteil gebildet ist.

5. Vorrichtung nach Anspruch 4,
dadurch gekennzeichnet, daß das Gehäuseteil durch Einwirkung von außen parallel zu den Außenkanten des Gehäuses verstellbar ausgebildet ist.

6. Vorrichtung nach Anspruch 4,
dadurch gekennzeichnet, daß das Gehäuseteil in zwei verschiedenen Einbaulagen im Gehäuse anzuordnen ist.

7. Vorrichtung nach den Ansprüchen 1 bis 6,
dadurch gekennzeichnet, daß sie aus mehreren hintereinander angeordneten Teilvorrichtungen besteht.

8. Vorrichtung nach den Ansprüchen 1 bis 3,
gekennzeichnet durch einen Gehäuseabschnitt, bei dem der Abstand der Gehäusebohrungsmittelpunkte geringer als der Abstand der Drehmittelpunkte ist.

9. Vorrichtung nach Anspruch 1,
dadurch gekennzeichnet, daß der Gehäuseabschnitt um den Mittelpunkt der Abstände drehbar ausgebildet ist.

10. Vorrichtung nach den Ansprüchen 1 und 3,
dadurch gekennzeichnet, daß in einem Hohlraum im Sattelbereich eine Leiste ( 4,4') schwenkbar angeordnet ist, deren Querschnitt kleiner als der Querschnitt des Hohlraumes ist.

11. Vorrichtung nach den Ansprüchen 1 und 2,
dadurch gekennzeichnet, daß in einem Hohlraum im Sattelbereich ein Sattelstück ( 13, 13') mit einem solchen Querschnitt angeordnet ist, daß zwischen der Oberfläche des Sattelstücks ( 13,13') und dem Außenumfang der Schneckenwellen ( 12,12') ein etwa sichelförmiger Hohlraum ( 15,15') verbleibt.

12. Vorrichtung nach Anspruch 1,
dadurch gekennzeichnet, daß zwischen dem Umfang der Schneckenwellen und der Gehäusebohrung ( 24 ) ein vergrößerter Abstand vorhanden, das Gehäuse (21) in Querrichtung elastisch ausgebildet und mit einer Vorrichtung (23) zur Ausübung von Zug- und/oder Druckkräften auf die Außenfläche des Gehäuses versehen ist.

## Claims

1. Arrangement for preparing and extruding viscous, elastic, plastic, granular and/or plastifiable materials, comprising an elongated and circumferentially closed housing ( 1,10, 18, 21 ) having an inner opening ( 24 ) consisting of two circular openings extending into one another, with saddle regions existing between said openings, and with screw shafts ( 2,3,11,12 ) engaging one another being disposed within said openings rotatably and capable of being driven in the same direction of rotation,
**characterized** in that the distance between said screw shafts ( 2, 3, 11, 12 ) and said housing opening ( 24 ) in at least one saddle region over a greater length in the axial direction of said screw shafts is greater than the distance actually required for receiving said screw shafts.

2. An arrangement as claimed in claim 1, **characterized** in that said distance enlargement has a constant value.

3. An arrangement as claimed in claim 1, **characterized** in that said distance enlargement is continuously variable within a restricted range.

4. An arrangement as claimed in claims 1 to 3, **characterized** in that said distance enlargement is effected with the aid of at least one independent housing member disposed within the saddle region.

5. An arrangement as claimed in claim 4, **characterized** in that said housing member is designed capable of being adjusted by action imposed from the outside, parallel in relation to the outer edges of said housing.

6. An arrangement as claimed in claim 4, **characterized** in that said housing member is to be provided for in two different mounting positions within said housing.

7. An arrangement as claimed in claims 1 to 6, **characterized** in that it consists of several partial arrangements disposed one behind the other.

8. An arrangement as claimed in claims 1 to 3, **characterized** by one housing section in which the distance between the center points of the housing openings is smaller than the distance between the centers of rotation.

9. An arrangement as claimed in claim 1, **characterized** in that said housing section is designed capable of being turned about a center point of said distances.

10. An arrangement as claimed in claims 1 and 3, **characterized** in that in a hollow space within said saddle region there is arranged a turnable strip ( 4, 4'), with the cross-section thereof being smaller than the cross-section of said hollow space.

11. An arrangement as claimed in claims 1 and 2, **characterized** in that in one hollow space within said saddle region there is arranged a saddle member ( 13, 13' ) having such a cross-section that a somewhat sickle-shaped hollow space ( 15, 15' ) will remain between the surface of said saddle member ( 13, 13' ) and the outer circumference of said screw shafts ( 12, 12' ).

12. An arrangement as claimed in claim 1, **characterized in** that an enlarged distance is provided for between the circumference of said screw shafts and the said opening of said housing ( 24 ), that said housing ( 21 ) itself is designed to be elastic in the transverse direction and is provided with means for imparting pulling and/or pressing forces ( 23 ) to the outer surface of said housing.

## Revendications

1. Dispositif pour la préparation et l'extrusion de matériaux visqueux, élastiques, plastiques, en forme de granulés et/ou plastifiables, comprenant un carter allongé (1, 10, 18, 21) fermé sur sa circonférence qui comporte un perçage intérieur (24) formé de deux perçages circulaires sécants et présentant entre ceux-ci des zones d'appui, dans lequel des arbres à vis (2, 3, 11, 12) s'engrenant sont disposés rotatifs et aptes à être entraînés dans le même sens de rotation dans les perçages,
caractérisé en ce que dans au moins une zone d'appui, l'écartement entre les arbres à vis (2, 3, 11, 12) et le perçage intérieur (24), sur une assez grande longueur dans le sens axial des arbres à vis, est plus grand que ne l'exige la réception de ceux-ci.

2. Dispositif selon la revendication 1, caractérisé en ce que cet écartement élargi présente une valeur constante.

3. Dispositif selon la revendication 1, caractérisé en ce que l'écartement élargi est conçu pour pouvoir être modifié de façon continue dans une plage de grandeurs limitée.

4. Dispositif selon les revendications 1 à 3, caractérisé en ce que l'écartement élargi est défini par au moins une partie de carter indépendante disposée dans la zone d'appui.

5. Dispositif selon la revendication 4, caractérisé en ce que la partie de carter est formée pour être réglable grâce à une action exercée de l'extérieur, parallèlement aux bords extérieurs du carter.

6. Dispositif selon la revendication 4, caractérisé en ce que la partie de carter est à disposer dans le carter dans deux positions de montage différentes.

7. Dispositif selon les revendications 1 à 6, caractérisé en ce qu'il se compose de plusieurs dispositifs partiels disposés les uns derrière les autres.

8. Dispositif selon les revendications 1 à 3, caractérisé par une section de carter dans laquelle l'écartement des centres des perçages de carter est inférieur à celui des centres de rotation.

9. Dispositif selon la revendication 1, caractérisé en ce que la section de carter est conçue pour pouvoir tourner sur le centre des écartements.

10. Dispositif selon les revendications 1 et 3, caractérisé en ce qu'il est prévu, disposée pivotante dans une cavité ménagée dans la zone d'appui, une bordure (4, 4') dont la section transversale est inférieure à celle de la cavité.

11. Dispositif selon les revendications 1 et 2, caractérisé en ce qu'il est prévu, dans une cavité ménagée dans la zone d'appui, une pièce d'appui (13, 13') dont la section transversale est telle qu'il reste une cavité sensiblement en forme de croissant (15, 15') entre la surface de la pièce d'appui (13, 13') et la circonférence extérieure des arbres à vis (11, 12).

12. Dispositif selon la revendication 1, caractérisé en ce qu'un écartement élargi est défini entre la circonférence des arbres à vis et le perçage de carter (24), et le carter (21) est conçu pour être élastique dans le sens transversal et pourvu d'un dispositif (23) destiné à exercer des forces de traction et/ou de pression sur la surface extérieure du carter.
